# FASCICULE DE BREVET EUROPEEN

(11) **EP 0 454 547 B1**
(45) Date de publication et mention de la délivrance du brevet: **09.08.1995**
(21) Numéro de dépôt: 91401028.5
(22) Date de dépôt: 18.04.1991
(51) Int. Cl.: F16C 19/52, G01P 3/44

(54) **Moyeu à roulement équipé d'un dispositif de détection de la vitesse de rotation**
Rollennabe mit Sensoreinrichtung zur Erfassung der Drehzahl
Rolling wheelhub with a velocity detection device

(30) Priorité: 23.04.1990 FR 9005133
(43) Date de publication de la demande: 30.10.1991
(73) Titulaire: SKF FRANCE, F-92142 Clamart Cédex (FR)
(72) Inventeur: Caron, Fabrice, F-78210 Montigny-le-Bretonneux (FR)
(74) Mandataire: Casalonga, Axel

(56) Documents cités:
- EP-A- 0 343 058
- DE-A- 2 756 930
- FR-A- 2 574 501
- GB-A- 2 207 470
- US-A- 3 500 091

## Description

La présente invention concerne un moyeu à roulement par exemple un moyeu de roue à roulement pour véhicule, équipé d'un dispositif qui est constitué par un pulseur ou élément codeur et un capteur pour la détection de la vitesse de rotation.

Habituellement, les moyeux de roue à roulement pour véhicule comportent un élément tournant sur lequel viennent se fixer une roue et un plateau de disque ou de tambour de frein pour le freinage de la roue, un élément non tournant pour solidariser le moyeu avec le véhicule et des éléments de roulement disposés entre l'élément tournant et l'élément non tournant.

Des chemins de roulement pour les éléments de roulement peuvent être pratiqués directement dans l'élément tournant et/ou non tournant ou dans des bagues rapportées qui sont solidaires de l'élément tournant ou de l'élément non tournant.

Dans le cas d'une roue non motrice, l'élément non tournant est généralement constitué d'un assemblage fusée/porte-fusée sur lequel sont fixées des bagues non tournantes du roulement avec la possibilité d'avoir l'une des bagues non tournante usinée directement sur la fusée. L'élément tournant est monté, pour ce mode de réalisation, extérieurement autour de l'élément non tournant de façon coaxiale.

Dans le cas d'une roue motrice, l'élément tournant est constitué par la fusée qui traverse intérieurement et coaxialement l'élément non tournant pour se terminer en un support de roue et de disque de frein.

De façon classique, les éléments de roulement sont protégés axialement par des joints d'étanchéité qui définissent un espace fermé pour d'une part retenir la graisse de lubrification pour le roulement, et d'autre part éviter des impuretés venant du milieu extérieur de pénétrer dans le roulement.

Il est courant de munir le moyeu de roue à roulement d'un dispositif de détection de la vitesse de rotation de la roue, notamment lorsque le véhicule est équipé d'un système de freinage anti-blocage de roue dit "ABS".

D'une manière générale, le dispositif de détection est constitué par un élément codeur appelé aussi pulseur rendu solidaire de l'élément tournant du moyeu et par un capteur monté fixe sur l'élément non tournant du moyeu. Dans les montages classiques, le pulseur est composé d'une bague en matériau ferromagnétique pourvue de dents ou d'encoches; le capteur est souvent du type inductif, la tête dudit capteur étant placée en regard des dents ou encoches du pulseur. La rotation du pulseur a pour effet de faire varier les signaux électriques du courant induit dans un bobinage du capteur d'une façon proportionnelle à la vitesse de rotation du pulseur.

Les montages classiques connus ont pour inconvénient majeur que la tête du capteur est souvent exposée à des projections d'eau et de salissures en provenance du milieu extérieur, lesdites projections risquant à la longue de détériorer la tête du capteur ou de perturber la précision de l'information fournie par le dispositif de détection de la vitesse de rotation de la roue. On peut citer à ce sujet FR-A-2 570 143 (la demande de brevet français 85 13 541) et le brevet américain US-A-4 783 180.

Des solutions proposées jusqu'à présent pour remédier à cet inconvénient majeur consistent toutes à assembler des pièces supplémentaires d'étanchéité sur l'élément tournant et/ou sur l'élément non tournant du moyeu pour former un espace fermé dans lequel sont logés le pulseur et le capteur. On peut citer comme exemple GB-A-2 207 470 qui est équivalent à FR-A-2 618 516 (la demande de brevet français 88 06 235) qui montre un moyeu à roulement muni d'une bague tournante et d'un ensemble d'étanchéité formé par deux écrans. L'un est pourvu de façon fixe d'un capteur et fixé à la bague non tournante tandis que l'autre est pourvu d'un élément de référence muni d'une pluralité de creux à intervalles réguliers sur un anneau, par exemple un élément denté, et fixé à la bague tournante de façon à permettre la détection de la vitesse de rotation relative entre les éléments tournants et non tournants.

De telles pièces d'étanchéité nécessitent des conceptions particulières du moyeu de roue à roulement pour leur assemblage. Il en résulte une complication structurelle du moyeu de roue, complication entraînant inévitablement une augmentation du prix de fabrication du moyeu. En outre, la nécessité d'avoir des pièces supplémentaires d'étanchéité se traduit par des difficultés accrues aussi bien pour la fabrication et le stockage, que le montage du moyeu de roue.

L'objet de la présente invention est de réaliser un moyeu à roulement pourvu d'un dispositif de détection de la vitesse de rotation dont le capteur est protégé de façon efficace et simple vis-à-vis des projections diverses du milieu extérieur.

L'invention a également pour objet de pallier les inconvénients des ensembles d'étanchéité classiques à l'aide d'une forme particulière du pulseur qui assure également la protection du capteur vis-à-vis du milieu extérieur.

Tel qu'il est revendiqué, le moyeu à roulement comprend un élément tournant et un élément non tournant disposés de façon coaxiale l'un à l'autre et des éléments de roulement disposés entre lesdits éléments tournant et non tournant. Le moyeu à roulement est équipé d'un dispositif de détection de la vitesse de rotation de l'élément tournant par rapport à l'élément non tournant, ledit dispositif de détection comprenant un capteur rendu solidaire de l'élément non tournant et un pulseur de forme annulaire rendu solidaire de l'élément tournant et pourvu d'une pluralité d'éléments perturbateurs destinés à générer dans le capteur, en tournant devant celui-ci, des variations de signal permettant la détection de la vitesse de rotation. Selon l'invention, le pulseur est réalisé d'une seule pièce à partir d'une tôle ferromagnétique et comporte une partie de montage par emmanchement sur une surface cylindrique de l'élément tournant et une partie de protection sans contact avec l'élément tournant et dont une portion tubulaire enveloppe radialement et extérieurement de façon étanche la tête du capteur , les éléments perturbateurs faisant partie de la partie de protection du pulseur.

Les éléments perturbateurs peuvent être réalisés sous la forme de dents, de bossages, d'encoches pratiquées sur une pièce en matériau ferromagnétique ou encore de masses magnétiques constituées par des pôles magnétiques alternés. Lorsque le pulseur est entraîné en rotation en même temps que l'élément tournant, le défilement des éléments perturbateurs devant la tête du capteur a pour effet un courant géré par induction dans le bobinage du capteur, le courant inductif variant suivant une fréquence proportionnelle à la vitesse de rotation du pulseur.

Selon l'invention, la partie de protection du pulseur doit former écran au moins radialement pour séparer la tête du capteur de l'extérieur. Une extrémité de la partie de protection se trouvant extérieurement au capteur coopère de préférence avec une surface de l'élément non tournant voisine du capteur, pour former soit un passage étroit, soit un joint frottant par l'intermédiaire d'une lèvre souple en matière plastique rapportée à ladite extrémité du pulseur, le moyen d'étanchéité ainsi constitué ne se trouvant de préférence pas au voisinage immédiat de la tête du capteur pour éviter que cette dernière soit exposée au milieu extérieur si le moyeu d'étanchéité fait défaut.

Le dispositif de détection constitué par le pulseur et le capteur est avantageusement disposé à proximité d'une rangée extérieure des éléments de roulement pour faciliter le montage. Il est connu de protéger des éléments de roulement par un joint d'étanchéité. Le pulseur doit être monté au voisinage du joint d'étanchéité des éléments de roulement de façon à former un espace clos sensiblement annulaire et délimité par le joint d'étanchéité, le pulseur et la face de l'élément non tournant avec laquelle le pulseur forme un moyen d'étanchéité. Cet espace clos est destiné alors à recevoir la tête du capteur qui est de préférence noyée dans l'élément non tournant.

Selon un mode de réalisation de l'invention, la partie de protection du pulseur remplace le joint d'étanchéité des éléments de roulement.

Etant donné que la tête du capteur doit être protégée vis-à-vis de l'extérieur, la partie de protection du pulseur ne doit pas laisser traverser les salissures jusqu'à l'intérieur de l'espace clos. Le pulseur est réalisé à l'aide d'une tôle ferromagnétique emboutie de façon adéquate pour pouvoir être emmanché sur l'élément tournant. Dans le cas où les éléments perturbateurs sont des encoches pratiquées dans la partie de protection, ces encoches sont alors obturées par un matériau en matière synthétique tel que le caoutchouc ou un matériau plastique surmoulé.

Bien entendu, la présente invention permet d'avoir une détection aussi bien radiale, axiale qu'inclinée par rapport à l'axe de rotation selon une surface de révolution, la forme du pulseur pouvant être en effet adaptée facilement à l'orientation de la tête du capteur.

L'invention sera mieux comprise à l'étude de la description détaillée de quelques modes de réalisation de l'invention pris à titre nullement limitatif et illustrés par les dessins annexés, sur lesquels :
la figure 1 est une vue schématique en coupe axiale d'un moyeu de roue à roulement pour une roue non motrice selon un premier mode de réalisation de l'invention;
la figure 2 est une vue schématique de détail de la figure 1;
la figure 3 est une vue partielle de la figure 2;
la figure 4 est une vue partielle de détail en coupe selon un second mode de réalisation de l'invention;
la figure 5 est une vue partielle schématique en coupe selon un troisième mode de réalisation de l'invention; et
la figure 6 est une vue partielle en coupe radiale montrant la structure des éléments perturbateurs de champ du pulseur selon un mode de réalisation de l'invention.

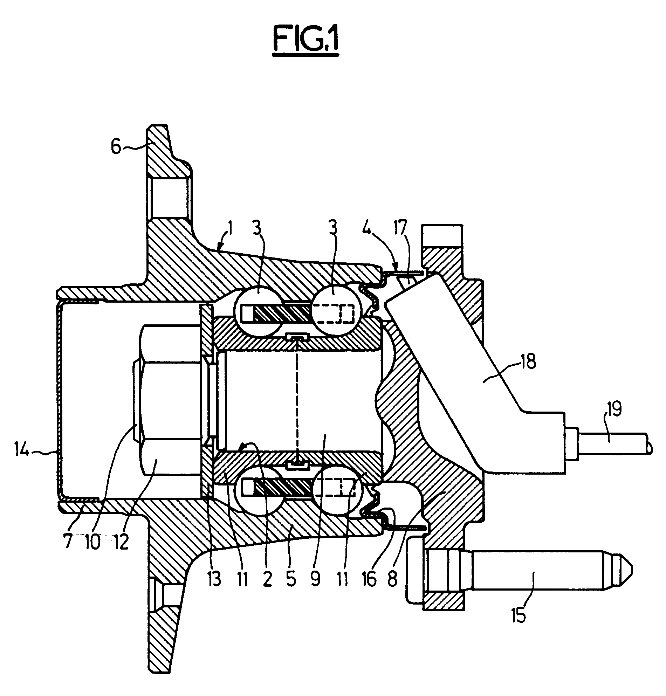

Comme montré sur la figure 1, le moyeu de roue à roulement comporte un élément tournant 1, un élément non tournant 2 et deux rangées d'éléments de roulement 3. Le moyeu est équipé d'un dispositif 4 de détection de la vitesse de rotation de l'élément tournant 1 par rapport à l'élément non tournant 2.

L'élément tournant 1 présente une partie 5 formant bague extérieure de roulement, un collet 6 pour le montage d'une roue et d'un plateau de disque ou de tambour de frein non représentés, et une portée tubulaire 7 pour le centrage de la roue et du plateau non représentés.

L'élément non tournant comprend un porte-fusée 8; une fusée 9 dont la partie d'extrémité 10 est filetée, deux bagues intérieures de roulement 11 autour de la fusée 9, un écrou 12 coopérant avec le filetage de la partie d'extrémité 10 de la fusée pour le blocage des bagues intérieures 11 sur l'ensemble fusée/porte-fusée par l'intermédiaire d'une rondelle 13. L'espace à l'intérieur de la portée tubulaire 7 est enfermé par un capot de fermeture 14 emmanché à l'extrémité de la portée tubulaire 7. L'élément non tournant 2 est solidarisé avec le véhicule à l'aide de plusieurs moyens de fixation 15.

A l'extrémité libre de la bague extérieure de roulement 5 est emmanché axialement un pulseur 16 qui est rendu ainsi solidaire de l'élément tournant 1. A l'intérieur du pulseur 16 se trouve la tête 17 d'un capteur 18 qui peut être par exemple de type inductif, capteur noyé dans le porte-fusée 8 de l'élément non tournant 2. Un câble de connexion 19 transmet des signaux électriques générés par le capteur 18 à un système de traitement non représenté.

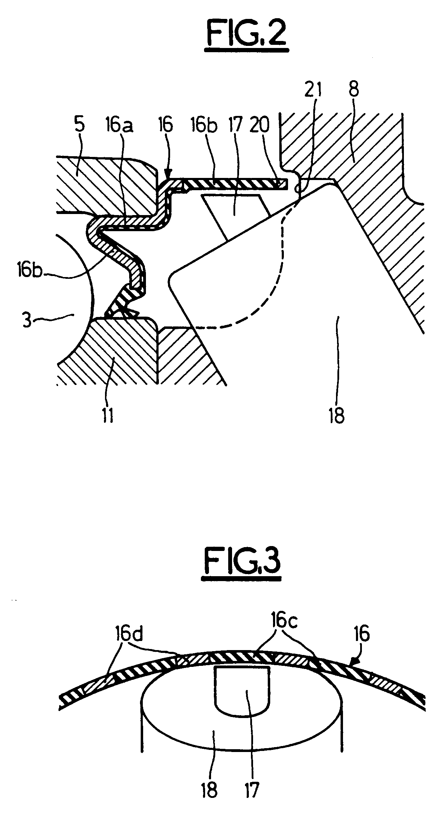

Comme montré sur les figures 2 et 3, le pulseur 16, réalisé sous forme d'une tôle ferromagnétique, comporte une partie d'emmanchement 16a et une partie de protection 16b. La partie de protection 16b présente une portion tubulaire sur laquelle sont pratiquées une pluralité d'encoches 16c espacées régulièrement par des barrettes pleines 16d, et une portion formant joint d'étanchéité des éléments de roulement 3. L'extrémité libre 20 de la portion tubulaire de la partie de protection 16b forme avec une face 21 du porte-fusée 8 un passage étroit constituant un moyen d'étanchéité vis-à-vis des projections venant de l'extérieur. Dans l'espace fermé par le pulseur 16 et la face 21 du porte-fusée 8 se trouve la tête 17 du capteur 18. Les encoches 16c sont remplies par un matériau non métallique, de préférence en caoutchouc ou en matière plastique de façon à former une surface régulière dans la portion tubulaire du pulseur 16. La tête 17 du capteur 18 est placée très près et face aux barrettes 16d et encoches 16c de façon à permettre une bonne sensibilité de détection des variations de champ magnétique lorsque le pulseur 16 est entraîné en rotation en même temps que l'élément tournant 1. Grâce à la forme particulière du pulseur 16, la tête 17 de capteur est efficacement protégée contre des salissures provenant du milieu extérieur. Il en résulte une bonne précision durable de la détection de la rotation du pulseur 16.

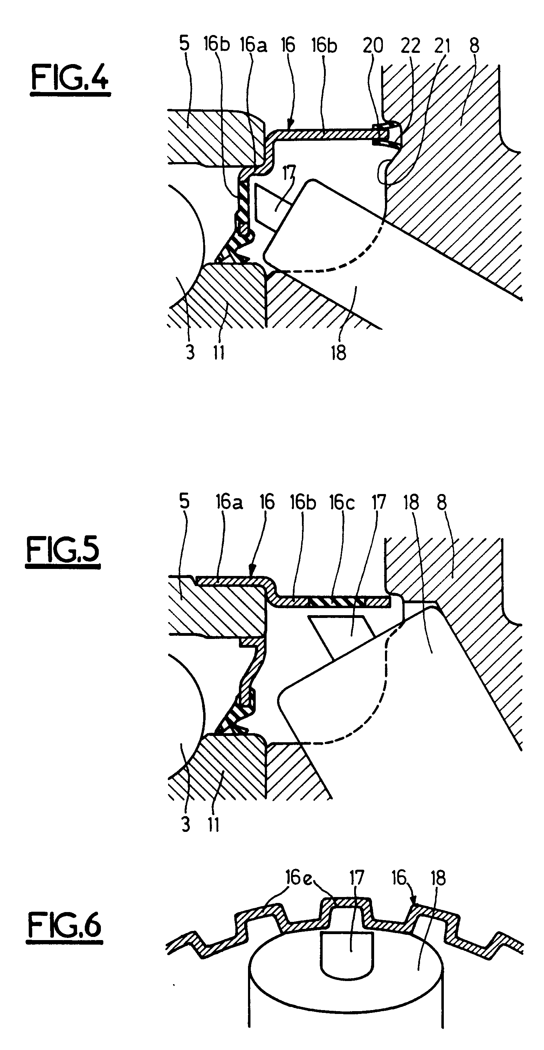

Sur la variante de la figure 4, les encoches 16c remplies de caoutchouc font partie du joint d'étanchéité des éléments de roulement 3. La détection est dans ce cas là axiale à l'aide de la tête 17 du capteur au lieu d'être radiale comme dans l'exemple précédent. En outre, il est possible de prévoir une lèvre souple d'étanchéité 22 reliée à l'extrémité libre 20 de la portion tubulaire du pulseur 16 de façon à former avec la face 21 du porte-fusée 8 un joint frottant qui assure la fonction d'étanchéité de l'espace dans lequel se trouve la tête 17 du capteur.

Selon le mode de réalisation illustré sur la figure 5, la partie d'emmanchement 16a du pulseur 16 est montée sur la face cylindrique extérieure de la bague extérieure 5 de roulement et la partie de protection 16b du pulseur 16 formant joint d'étanchéité pour les éléments de roulement 3. La détection est radiale de façon identique aux modes de réalisation illustrés sur les figures 1 à 3.

Sur la figure 6 est montrée une forme de pulseur 16 qui, au lieu de présenter les encoches 16c, est pourvu d'ondulations ou dents 16e formées par des déformations locales de la tôle ferromagnétique,

Les exemples illustrés ci-dessus portent tous sur un moyeu de roue à roulement dont la bague extérieure est constituée par l'élément tournant. Dans le cas où les bagues intérieures font partie de l'élément tournant, la bague extérieure constitue l'élément non tournant sur lequel est monté le capteur 18. Il suffit dans ce cas là de réaliser le pulseur 16 dont la partie d'emmanchement coopère avec l'une des bagues intérieures de roulement de l'élément tournant, et dont la partie de protection s'étend vers l'extérieur pour ensuite former une enveloppe extérieure protégeant la tête du capteur 18 selon le même critère que dans les exemples précédents.

## Revendications

1. Moyeu à roulement comprenant un élément tournant (1), un élément non tournant (2), disposés de façon coaxiale l'un à l'autre, et des éléments de roulement (3) disposés entre lesdits éléments tournant et non tournant, le moyeu étant équipé d'un dispositif (4) de détection de la vitesse de rotation de l'élément tournant par rapport à l'élément non tournant, ledit dispositif comprenant un capteur (18) rendu solidaire de l'élément non tournant et un pulseur (16) de forme annulaire rendu solidaire de l'élément tournant et pourvu d'une pluralité d'éléments perturbateurs (16c, 16d, 16e) destinés à générer dans le capteur (18), en tournant devant celui-ci, des variations de signal permettant la détection de la vitesse de rotation, caractérisé par le fait que le pulseur est réalisé d'une seule pièce à partir d'une tôle ferromagnétique et comporte une partie de montage (16a) par emmanchement sur une surface cylindrique de l'élément tournant (1) et une partie de protection (16b) sans contact avec l'élément tournant et dont une portion tubulaire enveloppe radialement et extérieurement de façon étanche la tête (17) du capteur (18), les éléments perturbateurs faisant partie de la partie de protection du pulseur.

2. Moyeu à roulement selon la revendication 1, caractérisé par le fait que la portion tubulaire de la partie de protection (16b) comporte une extrémité libre (20) coopèrant avec une face (21) de l'élément non tournant au voisinage du capteur (18) de façon à former un passage étroit ou un joint frottant par l'intermédiaire d'une lèvre souple (22) comme moyen d'étanchéité.

3. Moyeu à roulement selon la revendication 1 ou 2, caractérisé par le fait que la partie de protection (16b) du pulseur (16) présente une portion qui forme un joint d'étanchéité des éléments de roulement (3).

4. Moyeu à roulement selon l'une des revendications précédentes, caractérisé par le fait que les éléments perturbateurs de champ du pulseur (16) sont constitués par des encoches (16c) obturées par une matière synthétique et espacées régulièrement par des barrettes pleines (16d).

5. Moyeu à roulement selon l'une des revendications 1 à 3, caractérisé par le fait que les éléments perturbateurs du pulseur (16) sont constitués par des déformations locales telles que dents ou bossages de la tôle en matériau ferromagnétique constituant le pulseur.

6. Moyeu à roulement selon l'une des revendications précédentes, caractérisé par le fait qu'il est constitué d'un moyeu de roue à roulement pour véhicule dont l'élément tournant supportant une roue est disposé autour de l'élément non tournant (2).

7. Moyeu à roulement selon l'une des revendications 1 à 5, caractérisé par le fait qu'il constitue un moyeu de roue à roulement pour véhicule dont l'élément tournant (1) supportant une roue est entouré extérieurement par l'élément non tournant (2).

## Claims

1. Bearing hub comprising a rotating element (1) and a non-rotating element (2), arranged coaxially relative to one another, and rolling elements (3) arranged between the said rotating and non-rotating elements, the hub being equipped with a device (4) for detecting the rotational speed of the rotating element in relation to the non-rotating element, the said device comprising a sensor (18) fixed to the non-rotating element and an annular pulser (16) fixed to the rotating element and equipped with a plurality of disturbance elements (16c, 16d, 16e) intended for generating in the sensor (18), by rotating in front of the latter, signal variations making it possible to detect the rotational speed, characterised in that the pulser is made from a single piece using a ferromagnetic sheet and comprises a part (16a) for mounting by fitting onto a cylindrical surface of the rotating element (1) and a protective part (16b) without contact with the rotating element and a tubular portion of which radially and externally encases the head (17) of the sensor (18) sealingly, the disturbance elements forming part of the protective part of the pulser.

2. Bearing hub according to Claim 1, characterised in that the tubular portion of the protective part (16b) comprises a free end (20) which interacts with a face (21) of the non-rotating element in the vicinity of the sensor (18), so as to form a narrow passage or a seal rubbing by means of a flexible lip (22) as sealing means.

3. Bearing hub according to Claim 1 or 2, characterised in that the protective part (16b) of the pulser (16) has a portion which forms a gasket for the rolling elements (3).

4. Bearing hub according to one of the preceding claims, characterised in that the field disturbance elements of the pulser (16) consist of notches (16c) closed off by a synthetic material and spaced uniformly by means of solid bars (16d).

5. Bearing hub according to one of Claims 1 to 3, characterised in that the disturbance elements of the pulser (16) consist of local deformations, such as teeth or bosses, of the sheet of ferromagnetic material constituting the pulser.

6. Bearing hub according to one of the preceding claims, characterised in that it consists of a wheel bearing hub for a vehicle, of which the rotating element supporting a wheel is arranged around the non-rotating element (2).

7. Bearing hub according to one of Claims 1 to 5, characterised in that it constitutes a wheel bearing hub for a vehicle, of which the rotating element (1) supporting a wheel is surrounded externally by the non-rotating element (2).

## Patentansprüche

1. Nabe mit Wälzlagerung mit einem umlaufenden Element (1) und einem nicht umlaufenden Element (2), die koaxial zueinander angeordnet sind, sowie mit Wälzkörpern (3), die zwischen dem umlaufenden und dem nicht umlaufenden Element angeordnet sind, wobei die Nabe mit einer Einrichtung (4) zum Erfassen der Drehzahl des umlaufenden Elementes bezüglich des nicht umlaufenden Elementes ausgerüstet ist und diese Einrichtung einen an dem nicht umlaufenden Element befestigten Sensor (18) sowie einen ringförmigen Pulsgeber (16) aufweist, der an dem umlaufenden Element befestigt und mit einer Anzahl Beeinflussungselemente (16c, 16d, 16e) versehen ist, die dazu bestimmt sind, in dem Sensor (18) beim Umlaufen vor diesem Signaländerungen zu bewirken, welche das Erfassen der Drehzahl ermöglichen, dadurch gekennzeichnet, daß der Pulsgeber einstückig aus einem ferromagnetischen Blech ausgebildet ist und einen auf eine zylindrische Fläche des umlaufenden Elementes (1) aufsteckbaren Montageteil (16a) sowie einen Schutzabdeckteil (16b) aufweist, der das umlaufende Element nicht berührt und von dem ein rohrförmiger Abschnitt den Kopf (17) des Sensors (18) radial und außen abgedichtet umgibt, wobei die Beeinflussungselemente Teil des Schutzabdeckteils des Pulsgebers sind.

2. Nabe mit Wälzlagerung nach Anspruch 1, dadurch gekennzeichnet, daß das freie Ende (20) des rohrförmigen Teiles mit einer Fläche (21) des nicht umlaufenden Teiles in der Nähe des Sensors (18) derart zusammenwirkt, daß ein schmaler Durchlaß oder über eine biegsame Lippe (22) eine Reibdichtung als Abdichtungsmittel ausgebildet ist.

3. Nabe mit Wälzlagerung nach Anspruch 1 oder 2, dadurch gekennzeichnet, daß der Schutzabdeckteil (16b) des Pulsgebers (16) einen Abschnitt aufweist, der eine Abdichtung der Wälzkörper (3) bildet.

4. Nabe mit Wälzlagerung nach einem der vorhergehenden Ansprüche, dadurch gekennzeichnet, daß die Feldbeeinflussungselemente des Pulsgebers (16) durch Ausnehmungen (16c) gebildet sind, die mit einem Kunststoff verschlossen und durch Vollmaterialstege (16d) gleichmäßig voneinander beabstandet sind.

5. Nabe mit Wälzlagerung nach einem der Ansprüche 1 bis 3, dadurch gekennzeichnet, daß die Beeinflussungselemente des Pulsgebers (16) durch örtliche Verformungen, wie Zähne oder Höcker des den Pulsgeber bildenden, aus ferromagnetischem Material bestehenden Bleches gebildet sind.

6. Nabe mit Wälzlagerung nach einem der vorhergehenden Ansprüche, dadurch gekennzeichnet, daß sie durch eine Fahrzeugradnabe mit Wälzlagerung gebildet ist, deren ein Rad tragendes umlaufendes Element das nicht umlaufende Element (2) umschließend angeordnet ist.

7. Nabe mit Wälzlagerung nach einem der Ansprüche 1 bis 5, dadurch gekennzeichnet, daß sie durch eine Kraftfahrzeugradnabe mit Wälzlagerung gebildet ist, deren ein Rad tragendes umlaufendes Element (1) außen von dem nicht umlaufenden Element (2) umschlossen ist.
